(19) Europäisches Patentamt
European Patent Office
Office européen des brevets

(11) **EP 3 030 037 B1**

(12) **EUROPEAN PATENT SPECIFICATION**

(45) Date of publication and mention
of the grant of the patent:
**22.05.2019 Bulletin 2019/21**

(51) Int Cl.:
***H04W 76/14*** *(2018.01)*

(21) Application number: **15162211.5**

(22) Date of filing: **01.04.2015**

(54) **METHOD OF OFFLOADING NETWORK TRAFFIC TO A DEVICE-TO-DEVICE COMMUNICATION AND RELATED WIRELESS NETWORK SYSTEM**

VERFAHREN ZUM ENTLADEN VON NETZWERKVERKEHR AN EINE KOMMUNIKATION VON VORRICHTUNG ZU VORRICHTUNG UND ZUGEHÖRIGES DRAHTLOSES NETZWERKSYSTEM

PROCÉDÉ DE TRANSFERT DE TRAFIC DE RÉSEAU POUR UNE COMMUNICATION DE DISPOSITIF À DISPOSITIF ET SYSTÈME DE RÉSEAU SANS FIL ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2014 US 201414562767**

(43) Date of publication of application:
**08.06.2016 Bulletin 2016/23**

(73) Proprietor: **Acer Incorporated
New Taipei City 221 (TW)**

(72) Inventor: **Chuang, Ming-Dao
221 New Taipei City (TW)**

(74) Representative: **Becker Kurig Straus
Patentanwälte
Bavariastrasse 7
80336 München (DE)**

(56) References cited:
**EP-A1- 1 988 724      US-A1- 2011 258 327
US-A1- 2013 005 268      US-A1- 2014 307 657**

**Description**

Field of the Invention

The present invention is related to a method of offloading network traffic to a device-to-device communication and related wireless network system.

Background of the Invention

The 3rd Generation Partnership Project (3GPP) has developed various wireless communication networks. A universal mobile telecommunications system (UMTS) is a 3<sup>rd</sup> generation (3G) network which adopts a wideband code division multiple access (WCDMA) technology capable of providing high frequency spectrum utilization, universal coverage, and highspeed/quality multimedia data transmission. In the UMTS network, a radio access network known as a universal terrestrial radio access network (UTRAN) includes multiple base stations, commonly known as Node-Bs (NBs), for communicating with multiple user equipment (UE). A long-term evolution (LTE) system is a 4<sup>th</sup> generation (4G) network which includes a new radio interface and radio network architecture capable of providing a high data rate, low latency, packet optimization, and improved system capacity and coverage. In the LTE network, a radio access network known as an evolved UTRAN (E-UTRAN) includes multiple evolved NBs (eNBs) for communicating with multiple UEs and a core network which includes a mobility management entity (MME), a serving gateway and other devices for NAS (Non Access Stratum) control.

Device-to-device (D2D) communication is a technology which allows UEs to directly communicate among each other without having a base station to constantly forwarding data in between. A conventional LTE system typically only allows signaling to be exchanged between a UE and a base station while direct exchanges among UEs themselves are not yet defined. In spite of the plans to introduce LTE D2D services in the 3GPP Release 12, direct peer-to-peer/point-to-point (P2P) communications between UEs are not yet feasible in an LTE system at this point of time. Currently, even though UEs in the LTE system may be situated right next to each other, the UEs would still be required to go through the network entry procedure through a base station configured to forward each and every data sent by one UE to another UE, thereby increasing the loading of the network. Therefore, there is a need for a method of offloading network traffic to D2D communications.

US 2014/307657 A1 teaches a device and a method for performing D2D communication in a wireless communication system. The method includes transmitting information on a self-frequency band selected from all frequency bands for the D2D communication, to the second mobile station, receiving information on a counterpart-frequency band selected for the D2D communication, from the second mobile station, determining transmission and reception frequency bands to be used for the D2D communication, based on the information on the self-frequency band and the information on the counterpart-frequency band, transmitting data to the second mobile station in the determined transmission frequency band, and receiving data from the second mobile station in the determined reception frequency band.

EP 1988724 A1 teaches a process for setting up direct radio communication between two or more user devices within a mobile cellular communications system, said users subscribing to the same operator. The process includes using a cognitive radio technique to detect spectrum resources available for radio communications in a certain area within which said at least two user devices are located, selecting at least one resource from among the available resources, said resource being a resource of the operator common to said two or more user devices, and setting up a direct radio link between said two users using said detected free resource of the operator.

Summary of the Invention

The present invention aims at providing a method of offloading network traffic to D2D communications and increasing the bandwidth of D2D communications.

This is achieved by methods of offloading network traffic to a D2D communication according to claim 1 and a wireless network system according to claim 7. The dependent claims pertain to corresponding further developments and improvements.

As will be seen more clearly from the detailed description following below, the claimed method of offloading network traffic to a D2D communication includes a first user equipment, which is supporting a first band capacity sends a D2D communication request to a second UE supporting a second band capacity; the first user equipment performing a first full band search associated with a specific radio access technology and the second user equipment performing a second full band search associated with the specific radio access technology; and the first user equipment conducting the D2D communication with the second user equipment using a D2D frequency if the D2D frequency can be selected according to the first band capacity, the second band capacity, the result of the first full band search, and the result of the second full band search.

As will be seen more clearly from the detailed description following below, the claimed method of offloading network traffic to a D2D communication includes creating a database in a first user equipment supporting a first band capacity and a second user equipment supporting a second band capacity, respectively, wherein each database includes a list of all available operators in one or multiple geographical regions and band information containing one or multiple frequency indexes, one or multiple uplink frequencies and one or multiple downlink frequencies associated with each operator; the first user equipment sends a D2D communication request to the second UE; the second user equipment reporting the second band capacity to the first user equipment after receiving the D2D communication request; the first user equipment assigning an operator available in a specific geographical region to the second user equipment according to the database, the first band capacity and the second band capacity; the first user equipment performing a first partial band search by scanning all frequencies associated with the assigned operator according to the database and the second user equipment performing a second partial band search by scanning all frequencies associated with the assigned operator according to the database; and the first user equipment conducting the D2D communication with the second user equipment using a D2D frequency if the D2D frequency can be selected according to the result of the first partial band search and the result of the second partial band search.

Brief Description of the Drawings

In the following, the invention is further illustrated by way of example, taking reference to the accompanying drawings.

FIG. 1 is a flowchart illustrating a method of offloading network traffic to D2D communications according to an embodiment of the present invention.

FIGs. 2A and 2B depict a flowchart illustrating a method of offloading network traffic to D2D communications according to another embodiment of the present invention.

FIG. 3 is a function diagram illustrating a wireless communication system according to an embodiment of the present invention.

Detailed Description

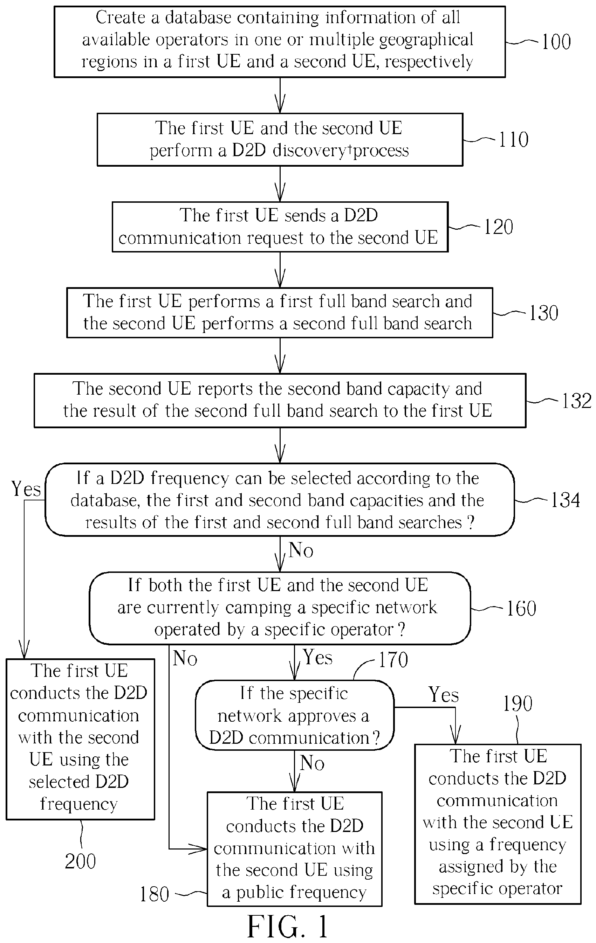

FIG. 1 is a flowchart illustrating a method of offloading network traffic to D2D communications according to an embodiment of the present invention. The method in FIG. 1 includes the following steps:

Step 100: create a database containing information of all available operators in one or multiple geographical regions in a first UE supporting a first band capacity and a second UE supporting a second band capacity, respectively; execute step 110.

Step 110: the first UE and the second UE perform a D2D discovery process; execute step 120.

Step 120: the first UE sends a D2D communication request to the second UE; execute step 130.

Step 130: the first UE performs a first full band search associated with a specific radio access technology (RAT) and the second UE performs a second full band search associated with the specific RAT; execute step 132.

Step 132: the second UE reports the second band capacity and the result of the second full band search to the first UE; execute step 134.

Step 134: the first UE determines if a D2D frequency can be selected according to the database, the first band capacity, the second band capacity, the result of the first full band search, and the result of the second full band search; if yes, execute step 200; if no, execute step 160.

Step 160: determine if both the first UE and the second UE are currently camping a specific network operated by a specific operator; if yes, execute step 170; if no, execute step 180.

Step 170: the first UE determines if the specific network approves a D2D communication; if yes, execute step 190; if no, execute step 180.

Step 180: the first UE conducts the D2D communication with the second UE using a public frequency.

Step 190: the first UE conducts the D2D communication with the second UE using a frequency assigned by the specific operator.

Step 200: the first UE conducts the D2D communication with the second UE using the selected D2D frequency.

In step 100, each database created in the first UE and the second UE may contain information of all available operators in one or multiple geographical regions. The following Table 1 is an example of the database:

Table 1

| Geographical region | Operator | Band Information |
|---|---|---|
| Country 1 | A1 | Band_A1 |
| | A2 | Band_A2 |
| | A3 | Band_A3 |
| | A4 | Band_A4 |
| | A5 | Band_A5 |
| Country 2 | B1 | Band_B1 |
| | B2 | Band_B2 |
| | ⋮ | ⋮ |
| Country 3 | C1 | Band_C1 |
| | C2 | Band_C2 |
| | ⋮ | ⋮ |
| ⋮ | ⋮ | ⋮ |

In an embodiment of the present invention, the geographical regions may be one or multiple countries. There may be one or multiple licensed operators in each country. The band information associated with each operator may include one or multiple frequency indexes, uplink frequencies and downlink frequencies licensed by each operator.

As well-known to those skilled in the art, D2D communications are proximity-based applications. D2D services between two UEs are only possible when these two UEs are in vicinity to each other, most of the time when in the same geographical region. The first band capacity and the second band capacity indicate how many operators the first UE and the second UE are able to receive normal services from. For example, a 3G/4G-compatible UE has a better band capacity than a 3G-capable UE. In an embodiment, when both operating in Country 1 having five licensed operators A1-A5, the first UE supporting the first band capacity may be able to receive normal services from all available operators A1-A5, while the second UE supporting the second band capacity may only be able to receive normal services from the operators A1-A4.

Before any direct D2D communication can take place, a D2D discovery process may be applied so that a D2D-capable UE may advertise its capabilities and/or search for other D2D-capable UEs in its vicinity. In step 110, both the first UE and the second UE may perform the D2D discovery process using WiFi, Bluetooth, near field communication (NFC), a radio interface of a 3GPP-based network, or other wireless communication techniques. However, the method of performing the D2D discovery process does not limit the scope of the present invention.

In step 120, the first UE may send the D2D communication request to the second UE. In step 130, the first UE may perform the first full band search by scanning all available frequencies of the specific RAT and the second UE may perform the second full band search by scanning all available frequencies of the specific RAT, such as a full LTE band search which scans all available LTE frequencies. The result the first and the second full band searches may be associated with the current location of the first UE, the current location of the second UE, the type of RATs provided by all available operators, and the coverage range of the specific RAT. For example, when both operating in Country 1 having five licensed operators A1-A5, the first UE currently located in a first location may only be able to detect three LTE operators A1-A3 during the first full band search, while the second UE currently located in a second location may only be able to detect two LTE operators A1-A2 during the second full band search.

In step 132, the second UE may report the second band capacity and the result of the second full band search to the first UE.

In step 134, it may be determined if the D2D frequency can be selected according to the database, the first band capacity, the second band capacity, the result of the first full band search, and the result of the second full band search. In an embodiment of the present invention, the first UE may select an operator using the following formula (1), wherein data X1 represents all available operators in a specific geographical region where the first UE is currently located, data X2 represents the first band capacity, data X3 represents the second band capacity, data X4 represents the result of the first full band search, and data X5 represents the result of the second full band search.

$$\text{Selected operator} = (X1 \cap X2 \cap X3) - X4 - X5 \qquad ...(1)$$

The following assumptions are made for illustrating a situation when the D2D frequency can be selected in step 134. Both the first UE and the second UE are currently operating in Country 1 and located within the D2D communication range with each other, that is, X1=A1+A2+A3+A4+A5. The first UE is capable of registering on networks provided by the all available operators in Country 1, that is, X2= A1+A2+A3+A4+A5. The second UE is capable of registering on networks provided by all available operators in Country 1 except the operator A5, that is, X3=A1+A2+A3+A4. After performing the first full band search, the first UE has detected the operators A2-A3, that is, X4=A2+A3. After performing the second full band search, the second UE has detected the operator A3-A4, that is, X5=A3+A4. Under such circumstances, the result of formula (1) would be the operator A1. The first UE may then conduct the D2D communication with the second UE using the selected D2D frequency (the downlink frequency or the uplink frequency of the operator A1 indicated in the database) in step 200.

The following assumptions are made for illustrating a situation when the D2D frequency cannot be selected in step 134. Both the first UE and the second UE are currently operating in Country 1 and located within the D2D communication range with each other, that is, X1=A1+A2+A3+A4+A5. The first UE is capable of registering on networks provided by the all available operators in Country 1, that is, X2= A1+A2+A3+A4+A5. The second UE is capable of registering on networks provided by all available operators in Country 1 except the operator A5, that is, X3=A1+A2+A3+A4. After performing the first full band search, the first UE has detected the operators A1-A3, that is, X4=A1+A2+A3. After performing the second full band search, the second UE has detected the operators A2-A4, that is, X5=A2+A3+A4. Under such circumstances, the result of formula (1) would be zero and step 160 may then be executed.

In step 160, it is determined if the first UE and the second UE are currently camping on the same specific network operated by the specific operator. If both the first UE and the second UE are currently camping on the specific network, the specific network may approve the D2D communication in step 170 when there are sufficient resources. The first UE may then conduct the D2D communication with the second UE using the frequency assigned by the specific operator in step 190.

If the first UE and the second UE are currently camping on networks operated by different operators, if any of the first UE and the second UE is not currently camping on any network, of if the specific network does not approve the D2D communication in step 170 due to lack of resources or other reasons, the first UE may then conduct the D2D communication with the second UE using the public frequency in step 180. The public frequency may be, but not limited to, a WiFi frequency, a Bluetooth frequency or an NFC frequency which operates in unlicensed spectrum.

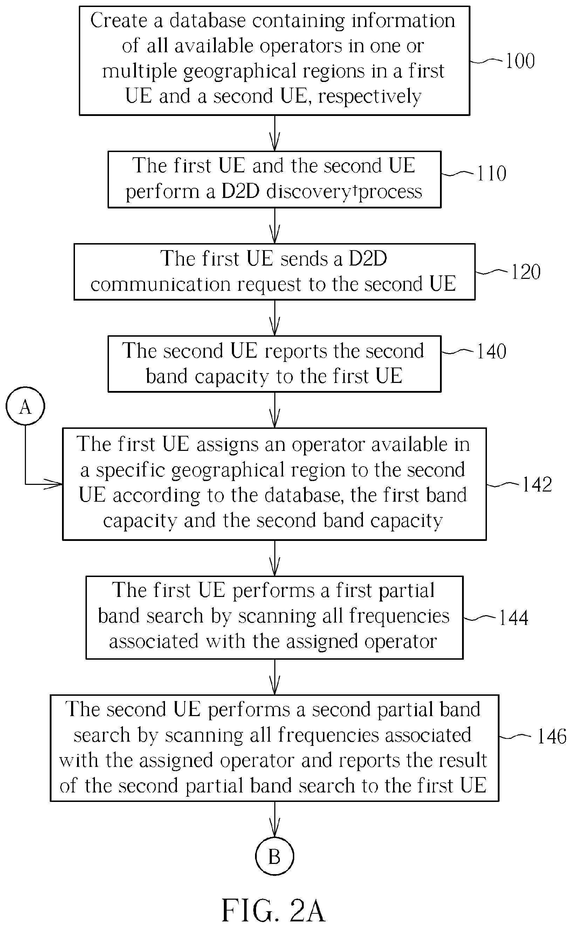

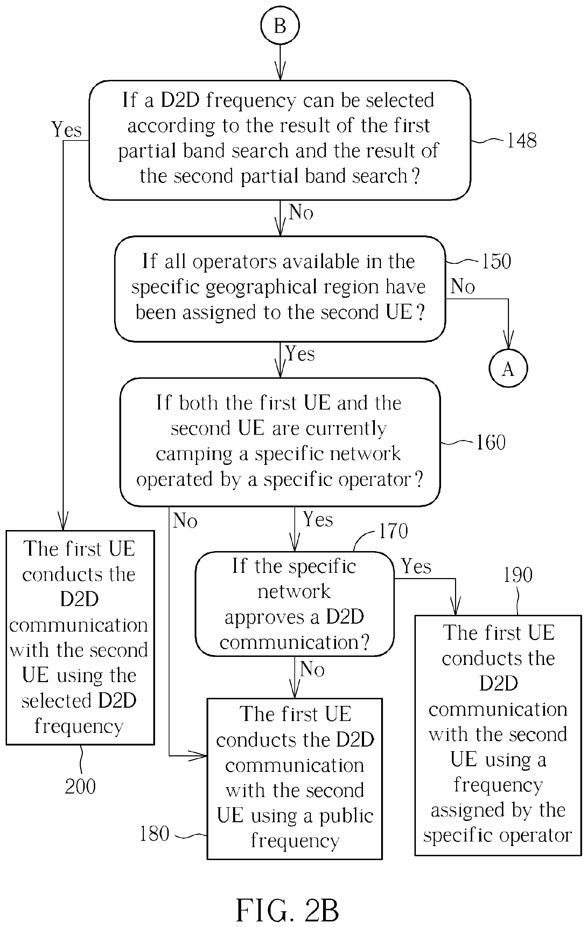

FIGs. 2A and 2B depict a flowchart illustrating a method of offloading network traffic to D2D communications according to another embodiment of the present invention. The method in FIGs. 2A and 2B includes the following steps:

Step 100: create a database containing information of all available operators in one or multiple geographical regions in a first UE supporting a first band capacity and a second UE supporting a second band capacity, respectively; execute step 110.

Step 110: the first UE and the second UE perform a D2D discovery process; execute step 130.

Step 120: the first UE sends a D2D communication request to the second UE; execute step 130.

Step 140: the second UE reports the second band capacity to the first UE; execute step 142.

Step 142: the first UE assigns an operator available in a specific geographical region to the second UE according to the database, the first b and capacity and the second band capacity; execute step 144.

Step 144: the first UE performs a first partial band search by scanning all frequencies associated with the assigned operator; execute step 146.

Step 146: the second UE performs a second partial band search by scanning all frequencies associated with the assigned operator and reports the result of the second partial band search to the first UE; execute step 148.

step 148: the first UE determines if a D2D frequency can be selected according to the result of the first partial b and search and the result of the second partial b and search; if yes, execute step 200; if no, execute step 150.

Step 150: the first UE determines if all operators available in the specific geographical region have been assigned to the second UE; if yes, execute step 160; if no, execute step 142.

Step 160: determine if the first UE and the second UE are currently camping on a specific network operated by a specific operator; if yes, execute step 170; if no, execute step 180.

Step 170: the first UE determines if the specific network approves a D2D communication; if yes, execute step 190; if no, execute step 180.

(continued)

Step 180: the first UE conducts the D2D communication with the second UE using a public frequency.

Step 190: the first UE conducts the D2D communication with the second UE using a frequency assigned by the specific operator.

Step 200: the first UE conducts the D2D communication with the second UE using the selected D2D frequency.

In the embodiment depicted in FIGs. 2A and 2B, steps 100-120 and 160-200 are executed in the same manner as the embodiment depicted in FIG. 1. However, steps 140-150 are executed in FIGs. 2A and 2B instead of executing steps 130-134 in FIG. 1.

In step 140, the second UE may report the second band capacity to the first UE. As previously stated, the first band capacity and the second band capacity indicate how many operators the first UE and the second UE are able to receive normal services from.

In step 142, the first UE may assign the specific operator available in the specific geographical region to the second UE based on the database, the first band capacity and the second band capacity. For example, when both operating in Country 1 having five licensed operators A1-A5, the first UE supporting the first band capacity may be able to receive normal services from all available operators A1-A5, while the second UE supporting the second band capacity may only be able to receive normal services from the operators A1-A4. Under such circumstance, the first UE may assign any of the operators A1-A4 to the second UE in step 142.

In step 144, the first UE may perform the first partial band search by scanning all frequencies associated with the assigned operator. The result the first partial band search may be associated with the current location of the first UE and the coverage range of the assigned operator. For example, if the operator A1 or A2 is assigned, the first UE may be able to detect at least one frequency indicated in the band information Band_A1 or at least one frequency indicated in the band information Band_A2 during the first partial band search; if the operator A3 or A4 is assigned, the first UE may not be able to detect any frequency indicated in the band information Band_A3 or Band_A4 during the first partial band search.

In step 146, the second UE may perform the second partial band search on all frequencies associated with the assigned operator and reports the result of the second partial band search to the first UE. The result the second partial band search may be associated with the current location of the second UE and the coverage range of the assigned operator. For example, if the operator A1 or A3 is assigned, the second UE may be able to detect at least one frequency indicated in the band information Band_A1 or at least one frequency indicated in the band information Band_A3 during the second partial band search; if the operator A2 or A4 is assigned, the second UE may not be able to detect any frequency indicated in the band information Band_A2 or Band_A4 during the second partial band search.

In step 148, it may be determined that the D2D frequency can be selected when no frequency associated with the assigned operator can be detected during the first partial band search and the second partial band search. For example, if the operator A1 is assigned, the first UE and the second UE may be able to detect at least one frequency indicated in the band information Band_A1 during the first partial band search and the second partial band search; if the operator A2 is assigned, the first UE may be able to detect at least one frequency indicated in the band information Band_A2 during the first partial band search, and the second UE may not be able to detect any frequency indicated in the band information Band_A2 during the second partial band search; if the operator A3 is assigned, the first UE may not be able to detect any frequency indicated in the band information Band_A3 during the first partial band search, and the second UE may be able to detect at least one frequency indicated in the band information Band_A3 during the second partial band search; if the operator A4 is assigned, the first UE and the second UE may not be able to detect any frequency indicated in the band information Band_A4 during the first partial band search and the second partial band search. Under such circumstances, the D2D frequency may be selected according to the band information Band_A4. The first UE may then conduct the D2D communication with the second UE using the selected D2D frequency (the downlink frequency or the uplink frequency of the operator A4 as indicated in the database) in step 200.

If any of the first UE and the second UE is able to detect at least one frequency associated with the assigned operator during the corresponding partial band search, steps 160-190 may then be executed in the same manner as the method depicted in FIG.1.

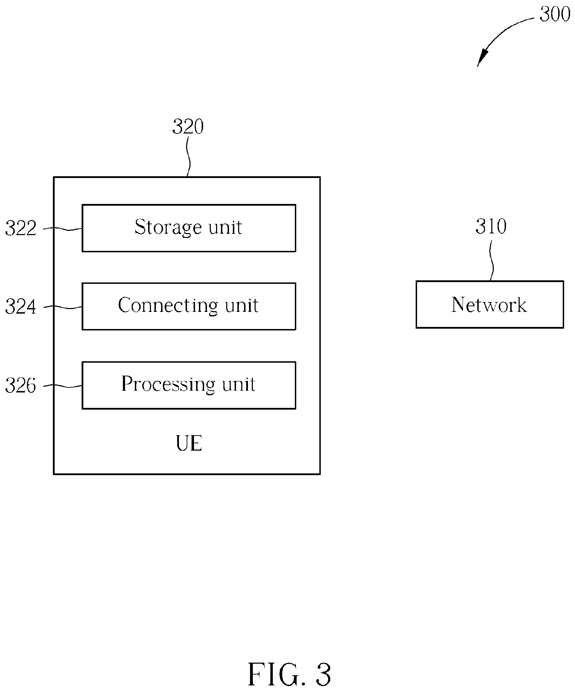

FIG. 3 is a function diagram illustrating a wireless communication system 300 according to an embodiment of the present invention. The wireless communication system 300 includes a network 310 and a plurality of UEs (only one UE 320 is depicted). The UE 320 includes a storage unit 322, a connecting unit 324, and a processing unit 326. The network 310 may be implemented with any 3GPP-based telecommunication capabilities, such as 2G, 2.5G, 3G or 4G network. The UE 310 may include D2D-capable electronic devices with any 3GPP-based telecommunication capabilities, such as mobile phones, personal digital assistants, handheld computers, tablet computers, nettop computers, or laptop computers. However, the type of the network 310 and the UE 320 does not limit the scope of the present invention.

The storage unit 322 may include random access memory (RAM), read only memory (ROM), a hard disk, a floppy disk, an optical disk, or other types of devices capable of storing the database in step 100. However, the type of the storage unit 322 does not limit the scope of the present invention

The connecting unit 324 may include one or multiple modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, UMTS/LTE radio transceiver devices, worldwide interoperability for microwave access (WiMAX) devices, and/or other well-known devices for connecting to other network entities. The connecting unit 324 allows the UE 320 to communicate with the network 310 or conduct D2D communications with other UEs. However, the type of the connecting unit 324 does not limit the scope of the present invention.

The processing unit 326 is configured to execute the present method simultaneously, serially, or alternatively by one processor. However, the type of the processing unit 326 does not limit the scope of the present invention.

In the present invention, a first UE may conduct a D2D communication with a second UE using a frequency selected according to the band capacity of the first and second UEs and the result of the band searches performed by the first and second UEs. The first UE may also conduct the D2D communication with the second UE using a frequency assigned by a network or using a public frequency. Therefore, the present invention can offload network traffic to the D2D communication and increase the bandwidth of the D2D communication.

**Claims**

1. A method of offloading network traffic to a device-to-device, D2D communication, the method comprises the steps of:

   a first user equipment (320) supporting a first band capacity sending a D2D communication request to a second UE (320) supporting a second band capacity;
   the first user equipment (320) performing a first full band search associated with a specific radio access technology and the second user equipment (320) performing a second full band search associated with the specific radio access technology;
   the first user equipment (320) determining that a D2D frequency can be selected when the D2D frequency is indicated in the first band capacity and the second band capacity, but is not indicated in the result of the first full band search and the result of the second full band search; and
   the first user equipment (320) conducting the D2D communication with the second user equipment (320) using the D2D frequency.

2. The method of any of claims 1, **further characterized by** comprising the further step of:

   creating a database in the first user equipment (320), wherein the database includes a list of all available operators in one or multiple geographical regions and band information containing one or multiple frequency indexes, one or multiple uplink frequencies and one or multiple downlink frequencies associated with each operator; and
   the first user equipment (320) determining that the D2D frequency can be selected when the D2D frequency is indicated in the database, the first band capacity and the second band capacity, but is not indicated in the result of the first full band search and the result of the second full band search.

3. The method of any of claims 1-2, **characterized in that:**

   the first user equipment (320) performs the first full band search by scanning all available frequencies of the specific radio access technology;
   the second user equipment (320) performs the second full band search by scanning all available frequencies of the specific radio access technology; and
   the first user equipment (320) determines that the D2D frequency can be selected when the D2D frequency is indicated in the first band capacity and the second band capacity, but is not scanned by the first user equipment (320) during the first full band search and not by the second user equipment (320) during the second full band search.

4. The method of any of claims 1-3, **further characterized by** comprising the further step of:

   the first user equipment (320) determining if both the first user equipment (320) and the second user equipment (320) are currently camping a specific network (310) operated by a specific operator when the D2D frequency cannot be selected according to the first band capacity, the second band capacity, the result of the first full band search, and the result of the second full band search;

the first user equipment (320) determining if the specific network (310) approves the D2D communication when both the first user equipment (320) and the second user equipment (320) are currently camping the specific network (310); and

the first user equipment (320) conducting the D2D communication with the second user equipment (320) using a frequency assigned by the specific network (310) if the specific network (310) approves the D2D communication.

5.  The method of claim 4, **further characterized by** comprising the further step of:

the first user equipment (320) conducting the D2D communication with the second user equipment (320) using a public frequency after determining that any one of the first user equipment (320) and the second user equipment (320) is not currently camping on the specific network (310) or after determining that the specific network (310) does not approve the D2D communication.

6.  The method of any of claims 1-3, **further characterized by** comprising the further step of:

the first user equipment (320) conducting the D2D communication with the second user equipment (320) using a public frequency if the D2D frequency cannot be selected according to the first band capacity, the second band capacity, the result of the first full band search, and the result of the second full band search.

7.  A wireless network system which offloads network traffic to a D2D communication, the wireless network system configured to execute method of offloading network traffic to the D2D communication according to any of claims 1-6.

**Patentansprüche**

1.  Verfahren zum Auslagern von Netzwerk-Verkehr auf eine *Device-to-Device,* D2D-Kommunikation, wobei das Verfahren die Schritte umfasst:

Senden einer D2D-KommunikationsAnfrage durch ein erstes Nutzer-Endgerät (320), das eine erste Frequenzband-Kapazität unterstützt, an ein zweites Nutzer-Endgerät (320, UE), das eine zweite Frequenzband-Kapazität unterstützt;

Durchführen einer mit einer speziellen Funkzugangstechnik verbundenen ersten vollen Frequenzbandsuche durch das erste Nutzer-Endgerät (320), und Durchführen einer mit der speziellen Funkzugangstechnik verbundenen zweiten vollen Frequenzbandsuche durch das zweite Nutzer-Endgerät (320);

Bestimmen, dass eine D2D-Frequenz ausgewählt werden kann durch das erste Nutzer-Endgerät (320), wenn die D2D-Frequenz in der ersten Frequenzband-Kapazität und der zweiten Frequenzband-Kapazität angezeigt wird, jedoch nicht in dem Ergebnis der ersten vollen Frequenzbandsuche und dem Ergebnis der zweiten vollen Frequenzbandsuche angezeigt wird; und

Ausführen der D2D-Kommunikation durch das erste Nutzer-Endgerät (320) mit dem zweiten Nutzer-Endgerät (320) unter Verwendung der D2D-Frequenz.

2.  Verfahren nach einem der Ansprüche 1, weiter **gekennzeichnet durch** die weiteren Schritte:

Erzeugen einer Datenbank in dem ersten Nutzer-Endgerät (320), wobei die Datenbank eine Liste aller verfügbaren Betreiber in einer oder vielen geografischen Regionen und Frequenzband-Informationen umfasst, die eine oder viele Frequenz-Indizes, eine oder viele Uplink-Frequenzen und eine oder viele, mit jedem Betreiber verbundene Downlink-Frequenzen beinhalten; und

Bestimmen **durch** das erste Nutzer-Endgerät (320), dass die D2D-Frequenz ausgewählt werden kann, wenn die D2D-Frequenz in der Datenbank, der ersten Frequenzband-Kapazität und der zweiten Frequenzband-Kapazität, jedoch nicht in dem Ergebnis der ersten vollen Frequenzbandsuche und dem Ergebnis der zweiten vollen Frequenzbandsuche angezeigt wird.

3.  Verfahren nach einem der Ansprüche 1-2, **dadurch gekennzeichnet, dass**:

das erste Nutzer-Endgerät (320) die erste volle Frequenzbandsuche durch Scannen aller verfügbaren Frequenzen der speziellen Funkzugangstechnik durchführt;

das zweite Nutzer-Endgerät (320) die zweite volle Frequenzbandsuche durch Scannen aller verfügbaren Frequenzen der speziellen Funkzugangstechnik durchführt; und

das erste Nutzer-Endgerät (320) bestimmt, dass die D2D-Frequenz ausgewählt werden kann, wenn die D2D-Frequenz in der ersten Frequenzband-Kapazität und der zweiten Frequenzband-Kapazität angezeigt wird, jedoch nicht durch das erste Nutzer-Endgerät (320) während der ersten vollen Frequenzbandsuche und nicht durch das zweite Nutzer-Endgerät (320) während der zweiten volle Frequenzbandsuche gescannt wurde.

4.  Verfahren nach einem der Ansprüche 1-3, weiter **gekennzeichnet durch** die Schritte:

    Bestimmen **durch** das erst Nutzer-Endgerät (320), ob sich sowohl das erste Nutzer-Endgerät (320) als auch das zweite Nutzer-Endgerät (320) aktuell in einem speziellen Netzwerk (310) befinden, das **durch** einen speziellen Betreiber betrieben wird, wenn die D2D-Frequenz nicht entsprechend der ersten Frequenzband-Kapazität, der zweiten Frequenzband-Kapazität, dem Ergebnis der ersten vollen Frequenzbandsuche, und dem Ergebnis der zweiten vollen Frequenzbandsuche ausgewählt werden kann;
    Bestimmen **durch** das erste Nutzer-Endgerät (320), ob das spezielle Netzwerk (310) die D2D-Kommunikation bestätigt, wenn sich sowohl das erste Nutzer-Endgerät (320) als auch das zweite Nutzer-Endgerät (320) aktuell in einem speziellen Netzwerk (310) befinden; und
    Ausführen der D2D-Kommunikation **durch** das erste Nutzer-Endgerät (320) mit dem zweiten Nutzer-Endgerät (320) unter Verwendung einer **durch** das spezielle Netzwerk (310) zugewiesenen Frequenz, wenn das spezielle Netzwerk (310) die D2D-Kommunikation bestätigt.

5.  Verfahren nach Anspruch 4, weiter **gekennzeichnet durch** den weiteren Schritt:
    Ausführen der D2D-Kommunikation **durch** das erste Nutzer-Endgerät (320) mit dem zweiten Nutzer-Endgerät (320) unter Verwendung einer öffentlichen Frequenz nach Bestimmen, dass sich weder das erste Nutzer-Endgerät (320) noch das zweite Nutzer-Endgerät (320) aktuell in dem speziellen Netzwerk (310) befinden oder nach Bestimmen, dass das spezielle Netzwerk (310) die D2D-Kommunikation nicht bestätigt.

6.  Verfahren nach einem der Ansprüche 1-3, weiter **kennzeichnet durch** den weiteren Schritt:
    Ausführen der D2D-Kommunikation **durch** das erste Nutzer-Endgerät (320) mit dem zweiten Nutzer-Endgerät (320) unter Verwendung einer öffentlichen Frequenz, wenn die D2D-Frequenz nicht entsprechend der ersten Frequenzband-Kapazität, der zweiten Frequenzband-Kapazität, dem Ergebnis der ersten vollen Frequenzbandsuche, und dem Ergebnis der zweiten vollen Frequenzbandsuche ausgewählt werden kann.

7.  Drahtloses Netzwerksystem, das Netzwerk-Verkehr auf eine D2D-Kommunikation auslagert, worin das drahtlose Netzwerksystem ausgestaltet ist, Verfahren zum Auslagern von Netzwerk-Verkehr auf die D2D-Kommunikation gemäß einem der Ansprüche 1-6 auszuführen.


**Revendications**

1.  Procédé de délestage de trafic de réseau pour une communication de dispositif à dispositif, D2D, le procédé comprenant les étapes consistant en :

    un premier équipement utilisateur (320) prenant en charge une première capacité de bande envoyant une demande de communication D2D à un deuxième EU (320) prenant en charge une deuxième capacité de bande ;
    le premier équipement utilisateur (320) effectuant une première recherche de bande complète associée à une technologie d'accès radio spécifique et le deuxième équipement utilisateur (320) effectuant une deuxième recherche de bande complète associée à la technologie d'accès radio spécifique ;
    le premier équipement utilisateur (320) déterminant qu'une fréquence D2D peut être sélectionnée lorsque la fréquence D2D est indiquée dans la première capacité de bande et la deuxième capacité de bande, mais n'est pas indiqué dans le résultat de la première recherche de bande complète et dans le résultat de la deuxième recherche de bande complète ; et le premier équipement utilisateur (320) effectuant la communication D2D avec le deuxième équipement utilisateur (320) à l'aide de la fréquence D2D.

2.  Procédé selon l'une quelconque des revendications 1, **caractérisé en outre en ce qu'**il comprend l'étape supplémentaire consistant en :

    la création d'une base de données dans le premier équipement utilisateur (320), la base de données comprenant une liste de tous les opérateurs disponibles dans une ou plusieurs régions géographiques et des informations de bande contenant un ou plusieurs indices de fréquence, une ou plusieurs fréquences de liaison montante et une ou plusieurs fréquences de liaison descendante associées à chaque opérateur ; et

le premier équipement utilisateur (320) détermine que la fréquence D2D peut être sélectionnée lorsque la fréquence D2D est indiquée dans la base de données, la première capacité de bande et la deuxième capacité de bande, mais n'est pas indiquée dans le résultat de la première recherche de bande complète et dans le résultat de la deuxième recherche de bande complète.

**3.** Procédé selon l'une quelconque des revendications 1-2, **caractérisé en ce que** :

le premier équipement utilisateur (320) effectue la première recherche de bande complète par balayage de toutes les fréquences disponibles de la technologie d'accès radio spécifique ;

le deuxième équipement utilisateur (320) effectue la deuxième recherche de bande complète par balayage de toutes les fréquences disponibles de la technologie d'accès radio spécifique ; et

le premier équipement utilisateur (320) détermine que la fréquence D2D peut être sélectionnée lorsque la fréquence D2D est indiquée dans la première capacité de bande et la deuxième capacité de bande, mais n'est pas balayée par le premier équipement utilisateur (320) pendant la première recherche de bande complète et pas par le deuxième équipement utilisateur (320) pendant la deuxième recherche de bande complète.

**4.** Procédé selon l'une quelconque des revendications 1 à 3, **caractérisé en outre en ce qu'**il comprend l'étape supplémentaire consistant en :

le premier équipement utilisateur (320) déterminant si à la fois le premier équipement utilisateur (320) et le deuxième équipement utilisateur (320) sont actuellement en attente sur un réseau spécifique (310) exploité par un opérateur spécifique lorsque la fréquence D2D ne peut pas être sélectionnée en fonction de la première capacité de bande, de la deuxième capacité de bande, du résultat de la première recherche de bande complète et du résultat de la deuxième recherche de bande complète ;

le premier équipement utilisateur (320) détermine si le réseau spécifique (310) approuve la communication D2D lorsque le premier équipement utilisateur (320) et le deuxième équipement utilisateur (320) sont actuellement en attente sur le réseau spécifique (310) ; et

le premier équipement utilisateur (320) effectue la communication D2D avec le deuxième équipement utilisateur (320) à l'aide d'une fréquence attribuée par le réseau spécifique (310) si le réseau spécifique (310) approuve la communication D2D.

**5.** Procédé selon la revendication 4, **caractérisé en outre en ce qu'**il comprend l'étape supplémentaire consistant en : le premier équipement utilisateur (320) effectuant la communication D2D avec le deuxième équipement utilisateur (320) à l'aide d'une fréquence publique après avoir déterminé que l'un quelconque du premier équipement utilisateur (320) et du deuxième équipement utilisateur (320) n'est pas actuellement en attente sur le réseau spécifique (310) ou après avoir déterminé que le réseau spécifique (310) n'approuve pas la communication D2D.

**6.** Procédé selon l'une quelconque des revendications 1 à 3, **caractérisé en outre en ce qu'**il comprend l'étape supplémentaire consistant en : le premier équipement utilisateur (320) effectuant la communication D2D avec le deuxième équipement utilisateur (320) à l'aide d'une fréquence publique si la fréquence D2D ne peut pas être sélectionnée en fonction de la première capacité de bande, de la deuxième capacité de bande, du résultat de la première recherche de bande complète et du résultat de la deuxième recherche de bande complète.

**7.** Système de réseau sans fil qui décharge un trafic de réseau vers une communication D2D, le système de réseau sans fil étant configuré pour exécuter un procédé de délestage de trafic de réseau vers la communication D2D selon l'une quelconque des revendications 1 à 6.

Create a database containing information of all available operators in one or multiple geographical regions in a first UE and a second UE, respectively —~100

The first UE and the second UE perform a D2D discovery process —~110

The first UE sends a D2D communication request to the second UE —~120

The first UE performs a first full band search and the second UE performs a second full band search —~130

The second UE reports the second band capacity and the result of the second full band search to the first UE —~132

Yes ← If a D2D frequency can be selected according to the database, the first and second band capacities and the results of the first and second full band searches ? —~134

No

If both the first UE and the second UE are currently camping a specific network operated by a specific operator ? —~160

No ← | → Yes —170

If the specific network approves a D2D communication? Yes → 190

The first UE conducts the D2D communication with the second UE using the selected D2D frequency

200

No

The first UE conducts the D2D communication with the second UE using a public frequency —~180

The first UE conducts the D2D communication with the second UE using a frequency assigned by the specific operator

FIG. 1

Create a database containing information of all available operators in one or multiple geographical regions in a first UE and a second UE, respectively ~100

The first UE and the second UE perform a D2D discovery†process ~110

The first UE sends a D2D communication request to the second UE ~120

The second UE reports the second band capacity to the first UE ~140

(A)

The first UE assigns an operator available in a specific geographical region to the second UE according to the database, the first band capacity and the second band capacity ~142

The first UE performs a first partial band search by scanning all frequencies associated with the assigned operator ~144

The second UE performs a second partial band search by scanning all frequencies associated with the assigned operator and reports the result of the second partial band search to the first UE ~146

(B)

# FIG. 2A

B

If a D2D frequency can be selected according to the result of the first partial band search and the result of the second partial band search? —148

Yes

No

If all operators available in the specific geographical region have been assigned to the second UE? —150

No

A

Yes

If both the first UE and the second UE are currently camping a specific network operated by a specific operator? —160

No

Yes

The first UE conducts the D2D communication with the second UE using the selected D2D frequency

200

170

If the specific network approves a D2D communication?

Yes

190

No

The first UE conducts the D2D communication with the second UE using a public frequency

180

The first UE conducts the D2D communication with the second UE using a frequency assigned by the specific operator

FIG. 2B

300

320

322 — Storage unit

324 — Connecting unit

326 — Processing unit

UE

310

Network

FIG. 3

**EP 3 030 037 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014307657 A1

- EP 1988724 A1